# EUROPEAN PATENT SPECIFICATION

(11) **EP 2 975 497 B1**
(45) Date of publication and mention of the grant of the patent: **04.05.2022**
(21) Application number: 14765724.1
(22) Date of filing: 04.03.2014
(51) Int. Cl.: G06F 3/0346, G06F 3/023, G06F 3/0362, H04M 1/00, A61B 5/11, G06F 3/01, G06F 1/16, G05B 15/02, G06F 3/02, G06F 3/03, G06F 3/041, H04M 1/725

(54) **TERMINAL DEVICE, TERMINAL DEVICE CONTROL METHOD, AND PROGRAM**
ENDGERÄTEVORRICHTUNG, ENDGERÄTEVORRICHTUNGSTEUERUNGSVERFAHREN UND PROGRAMM
DISPOSITIF TERMINAL, PROCÉDÉ DE COMMANDE DE DISPOSITIF TERMINAL, ET PROGRAMME

(30) Priority: 11.03.2013 JP 2013047892
(43) Date of publication of application: 20.01.2016
(73) Proprietor: Sony Group Corporation, Tokyo 108-0075 (JP)
(72) Inventor: NAGANO, Daisuke, Tokyo 108-0075 (JP); SATO, Daisuke, Tokyo 108-0075 (JP)
(74) Representative: MFG Patentanwälte Meyer-Wildhagen Meggle-Freund Gerhard PartG mbB
(86) International application number: PCT/JP2014/055457
(87) International publication number: WO 2014/141951

(56) References cited:
- JP-A- H09 134 249
- JP-A- 2006 041 592
- JP-A- 2006 041 592
- JP-A- 2008 140 064
- JP-A- 2011 188 469
- JP-A- 2012 155 487
- US-A1- 2009 088 204
- US-A1- 2011 084 913

## Description

### Technical Field

The present disclosure relates to a terminal device, a control method for a terminal device, and a program.

### Background Art

As terminal devices such as smartphones and tablet terminals that users hold and use in free orientation have been gaining widespread use, techniques have been devised to improve the operability by changing the arrangement of keys or the like displayed on the touch panel in accordance with the orientation of the terminal device. For example, Patent Literature 1 describes a technique of using inclination information on a housing to determine in which of portrait orientation and landscape orientation the terminal device is and determine with which of the right hand and the left hand a user is holding a terminal device, and displaying the keys or the like at positions on the touch panel that improve the operability for the respective cases. Patent Literature 4 discloses a method including displaying a set of buttons on a touch-sensitive display in different layouts based on an orientation of the portable electronic device and based on detected movements of the portable electronic device which occur when the user is jogging, bicycling or engaging in other activities that frequently jostle the device. However, Patent Literature 4 does not disclose switching a function to be implemented in accordance with an orientation irrespective of a vibration state when an operation having a predetermined pattern is detected.

Patent Literature 5 discloses a media device that includes a processor that receives a sensor signal based on at least one of a position, orientation, and movement of the media device and controls one or more operations of the media device based on the sensor signal and plurality of known movement patterns. Patent Literature 6 discloses an input device provided with a switching means for switching functions of an input button in accordance with a detected tilt of the device.

Meanwhile, terminal devices have a variety of forms. In addition to the smartphones and tablet terminals as described above, terminal devices that are worn on wrists when users exercise are known as described, for example, in Patent Literatures 2 and 3. Such terminal devices, for example, provide navigation information related to exercise such as running, play music during exercise, and provide rewards according to a result of exercise.

### Citation List

### Patent Literature

Patent Literature 1: JP 2012-256153A
Patent Literature 2: JP 2012-35071A
Patent Literature 3: JP 2012-20134A
Patent Literature 4: US 2011/084913 A1
Patent Literature 5: US 2009/088204 A1
Patent Literature 6: JP 2006 041592 A

### Summary of Invention

### Technical Problem

An operation unit of a terminal device as described in Patent Literature 1 which uses a touch panel can change the graphical user interface (GUI) of a displayed key or the like to implement a variety of functions with an operation on the same operation unit. However, GUIs displayed on a touch panel request a user to touch an appropriate position watching the image of a displayed key or the like. Accordingly, GUIs displayed on a touch panel are not always appropriate when terminal devices, for example, as described in Patent Literatures 2 and 3 are operated during exercise. Operation units of hardware such as buttons, jog dials, and touch sensors are preferred for those terminal devices in some cases.

Meanwhile, an operation unit of hardware basically corresponds to a single function, so that it is difficult to implement a variety of functions with an operation on the same operation unit as a touch panel does. It is certainly possible to switch operation units to support a plurality of functions, but some operations such as pressing a button along with another button or executing a predetermined procedure in advance have to be performed in many cases to switch the functions. It is not always preferable for terminal devices, for example, as described in Patent Literatures 2 and 3 in terms of downsizing/weight reduction of devices and simplification of operations that several buttons are installed as operation units or a complicate procedure has to be performed for the operations.

Accordingly, the present disclosure provides a novel and improved terminal device, control method for a terminal device, and program that allow an operation unit of hardware to implement a variety of functions in a simple procedure with an operation on the same operation unit.

### Solution to Problem

According to the present disclosure, there is provided a terminal device as defined in the appended claims. The terminal device includes: an operation unit of hardware operable in a specific direction; a sensor unit; an orientation determining unit configured to determine an orientation of the terminal device including the operation unit of hardware on the basis of data acquired from the sensor unit; an environmental information acquiring unit configured to determine a vibration state of the terminal device on the basis of acceleration data acquired from the sensor unit; and a control unit configured to switch a function to be implemented in response to an operation on the operation unit of hardware in accordance with the orientation, wherein the control unit is configured to further switch the function in accordance with the vibration state, and wherein, when the operation unit of hardware detects an operation having a predetermined pattern, the control unit switches the function in accordance with the orientation irrespective of the vibration state.

According to the present disclosure, there is provided a control method for a terminal device as defined in the appended claims.

According to the present disclosure, there is provided a program for causing a computer to implement a method as defined in the appended claims.

Switching functions in accordance with the orientation of a terminal device on the basis of the vibration state allows the terminal device to implement a variety of functions in a simple procedure with an operation on the same operation unit even while the terminal device is carried by a user who is, for example, exercising or running.

### Advantageous Effects of Invention

According to the present disclosure as described above, it is possible to allow an operation unit of hardware to implement a variety of functions in a simple procedure with an operation on the same operation unit.

### Brief Description of Drawings

[FIG. 1] FIG. 1 is a perspective view of a terminal device according to a first embodiment of the present disclosure.
[FIG. 2] FIG. 2 is a block diagram schematically illustrating a hardware configuration of the terminal device according to the first embodiment of the present disclosure.
[FIG. 3] FIG. 3 is a block diagram schematically illustrating a functional configuration of the terminal device according to the first embodiment of the present disclosure.
[FIG. 4] FIG. 4 is a diagram for describing a function implemented when a jog dial is operated with the terminal device held in portrait orientation in the first embodiment of the present disclosure.
[FIG. 5] FIG. 5 is a diagram for describing a function implemented when a jog dial is operated with the terminal device held in landscape orientation in the first embodiment of the present disclosure.
[FIG. 6] FIG. 6 is a flowchart illustrating an example of a process in the first embodiment of the present disclosure.
[FIG. 7] FIG. 7 is a plan of a terminal device according to a second embodiment of the present disclosure.
[FIG. 8] FIG. 8 is a block diagram schematically illustrating a hardware configuration of the terminal device according to the second embodiment of the present disclosure.
[FIG. 9] FIG. 9 is a diagram illustrating that a touch sensor is operated with the terminal device in portrait orientation in the second embodiment of the present disclosure.
[FIG. 10] FIG. 10 is a diagram illustrating that a touch sensor is operated with the terminal device in landscape orientation in the second embodiment of the present disclosure.
[FIG. 11] FIG. 11 is a diagram for describing a modified example of the second embodiment of the present disclosure.
[FIG. 12] FIG. 12 is a perspective view of a terminal device according to a third embodiment of the present disclosure.
[FIG. 13] FIG. 13 is a perspective view of a terminal device according to a fourth embodiment of the present disclosure.
[FIG. 14] FIG. 14 is a perspective view of a terminal device according to a fifth embodiment of the present disclosure.
[FIG. 15] FIG. 15 is a perspective view of a terminal device according to a sixth embodiment of the present disclosure.
[FIG. 16] FIG. 16 is a perspective view of a terminal device according to a seventh embodiment of the present disclosure.
[FIG. 17] FIG. 17 is a flowchart illustrating a process in a modified example common to each of the embodiments of the present disclosure.

### Description of Embodiments

Hereinafter, preferred embodiments of the present disclosure will be described in detail with reference to the appended drawings. Note that, in the present description and the drawings, elements that have substantially the same function and structure are denoted with the same reference signs, and repeated description is omitted.

The description will be now made in the following order.
1. First Embodiment
1-1. Appearance of Terminal Device
1-2. Hardware Configuration of Terminal Device
1-3. Functional Configuration of Terminal Device
1-4. Examples of Functions Selectively Implemented
1-5. Process Flow
2. Second Embodiment
2-1. Configuration of Terminal Device
2-2. Examples of Functions Selectively Implemented
2-3. Modified Example
3. Third Embodiment
4. Fourth Embodiment
5. Fifth Embodiment
6. Sixth Embodiment
7. Seventh Embodiment
8. Modified Example
9. Supplement

### (1. First Embodiment)

### (1-1. Appearance of Terminal Device)

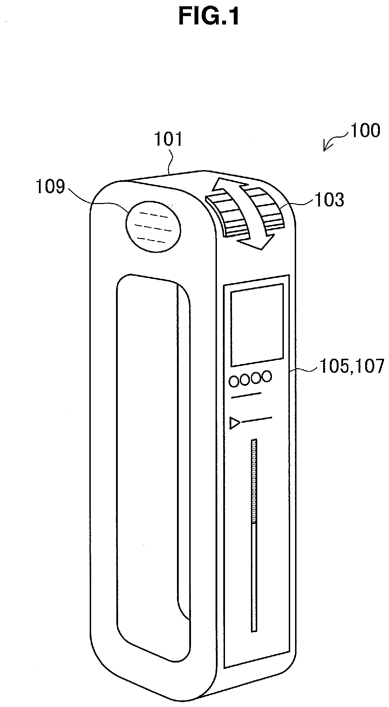

FIG. 1 is a perspective view of a terminal device according to a first embodiment of the present disclosure. FIG. 1 illustrates that a terminal device 100 includes a housing 101, a jog dial 103, a touch panel 105, a display 107, and a speaker 109. The housing 101 is a cuboid with rounded corners, and has a longitudinal hole at the center for a user to insert his or her finger. A user can firmly grip the housing 101, for example, by inserting his or her four fingers into this hole. For example, gripped in this way, the terminal device 100 is carried by a user during exercise such as running.

The jog dial 103 is installed on the surface of the housing 101 (at the corner in the illustrated example), and rotated or depressed by a thumb of a user, for example, when the housing 101 is held by the user. Additionally, the jog dial 103 may also be operated by a finger of the opposite hand to the hand with which a user holds the housing 101. The touch panel 105 and the display 107 are disposed to face a user when the housing 101 is held, and display a GUI for implementing a variety of functions discussed below. The speaker 109 outputs a sound for a user as necessary.

The jog dial 103 is an operation unit that is operable in a specific direction. For example, the jog dial 103 receives a rotational operation in the circumferential direction of the dial and a depressing operation in the radial direction of the dial. Such an operation unit is operated less freely, for example, than the touch panel 105. However, different from a GUI, such an operation unit is not dependent on the sight of a user, so that a user can advantageously operate the operation unit (blindly) without watching the operation unit and easily operate the operation unit while the housing 101, and the user himself or herself are vibrating. Additionally, if the touch panel 105 is not combined with a GUI displayed on the display 107, but used as means for simply detecting a touch operation, and a drag operation and a flick operation in a specific direction, the touch panel 105 may also serve as an operation unit that is operable in a specific direction as with the jog dial 103.

### (1-2. Hardware Configuration of Terminal Device)

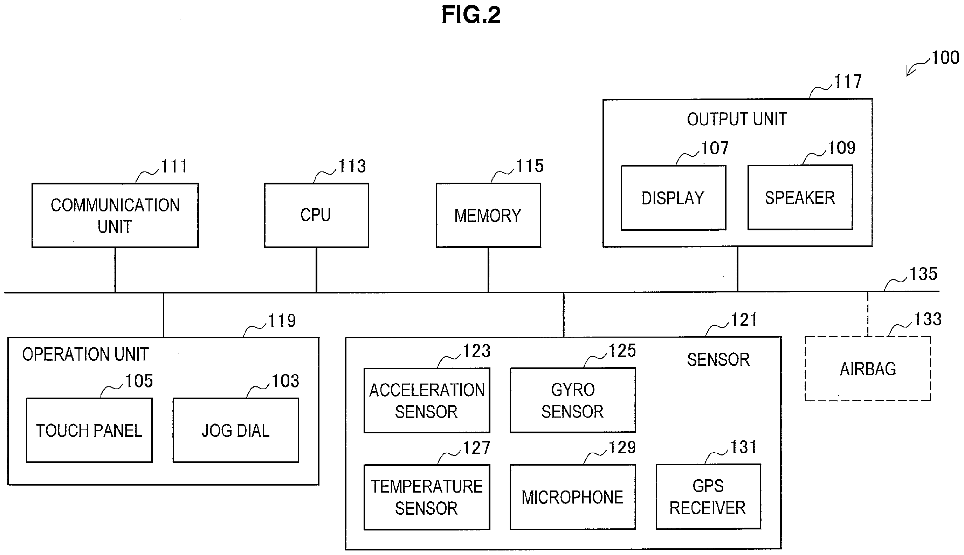

FIG. 2 is a block diagram schematically illustrating a hardware configuration of the terminal device according to the first embodiment of present disclosure. FIG. 2 illustrates that the terminal device 100 includes a communication unit 111, a central processing unit (CPU) 113, a memory 115, an output unit 117, an operation unit 119, and a sensor 121 as a hardware configuration. The terminal device 100 may further includes an airbag 133 discussed below. These structural elements are connected to each other by a bus 135.

The communication unit 111 is a communication device that performs wireless communication such as a mobile phone network and Wi-Fi. The terminal device 100 receives, for example, information for navigation for running discussed below and distributed music content through communication performed by the communication unit 111.

The CPU 113 operates in accordance with a program stored in the memory 115, thereby controlling each unit of the terminal device 100 to implement a variety of functions. For example, the CPU 113 implements a navigation function for running and a music reproduction function. Additionally, the functions implemented in the terminal device 100 will be discussed below in detail.

The memory 115 temporarily or permanently stores various kinds of data used in the terminal device 100. For example, the memory 115 stores a program code for operating the CPU 113. In addition, the memory 115 may also accumulate various kinds of information for navigation for running which include, for example, information on a course, information on the speed and split time of a user, and information on consumed calories. The memory 115 may further store content data for the music reproduction function.

The output unit 117 includes the display 107 and the speaker 109. The display 107 displays an image under the control of the CPU 113. The speaker 109 similarly outputs a sound under the control of the CPU 113.

The operation unit 119 includes the touch panel 105 and the jog dial 103. The touch panel 105 is disposed on the surface of the display 107, and detects a contact position of a user on the display 107. The jog dial 103 is disposed on the surface of the housing 101 as discussed above, and rotated or depressed by a user in a predetermined direction.

The sensor 121 includes an acceleration sensor 123, a gyro sensor 125, a temperature sensor 127, a microphone 129, and a global positioning system (GPS) receiver 131. These sensors are used for detecting the position, the orientation, and the surrounding environment of the terminal device 100 as discussed below. The sensor 121 may include an air pressure sensor, a humidity sensor, a geomagnetic sensor, an optical sensor, and the like in another embodiment.

### (1-3. Functional Configuration of Terminal Device)

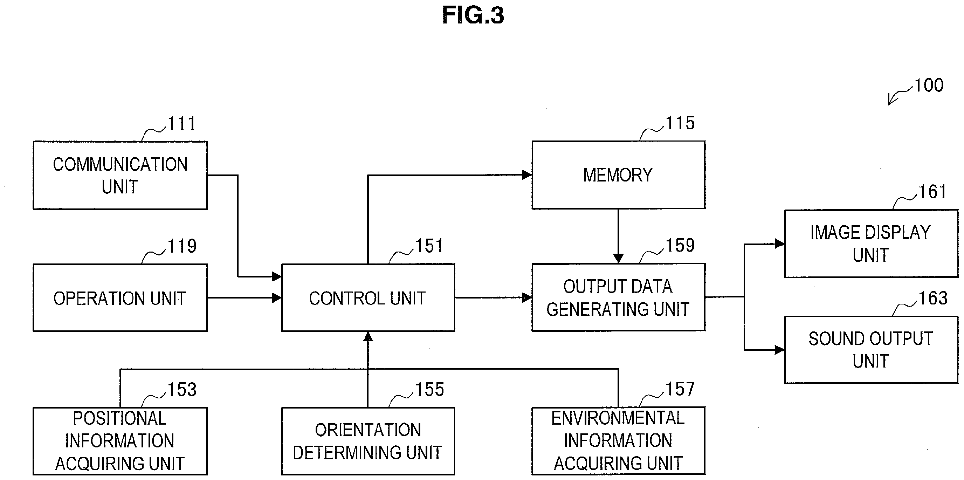

FIG. 3 is a block diagram schematically illustrating a functional configuration of the terminal device according to the first embodiment of the present disclosure. FIG. 3 illustrates that the terminal device 100 includes a control unit 151, a positional information acquiring unit 153, an orientation determining unit 155, an environmental information acquiring unit 157, an output data generating unit 159, an image display unit 161, and a sound output unit 163 as a functional configuration implemented by the CPU 113 as software.

The control unit 151 controls each unit of the terminal device 100 on the basis of information input from the communication unit 111 and the operation unit 119. For example, the control unit 151 causes the output data generating unit 159 to generate navigation information for running on the basis of information acquired by the positional information acquiring unit 153 and the environmental information acquiring unit 157. In addition, the control unit 151 uses content data stored in the memory 115 to cause the output data generating unit 159 to generate sound data for music reproduction. The control unit 151 may further cause the output data generating unit 159 to generate data for displaying a GUI of the navigation function for running and the music reproduction function.

The control unit 151 acquires a result obtained by the orientation determining unit 155 determining the orientation of the terminal device 100. The control unit 151 selectively implements any of a function related to navigation for running and a function related to the music reproduction function in response to the operation acquired by the jog dial 103 in accordance with the orientation of the terminal device 100. Additionally, a specific example of this selection will be discussed below.

The control unit 151 may further acquire a result obtained by the environmental information acquiring unit 157 determining the vibration state of the terminal device 100. In this case, the control unit 151 switches functions implemented for the music reproduction function in response to the operation acquired by the jog dial 103 in accordance with the vibration state of the terminal device 100. Additionally, a specific example of this switch will also be discussed below.

The positional information acquiring unit 153 executes a predetermined operation on the basis of data acquired, for example, from the GPS receiver 131 included in the sensor 121, or the communication unit 111 that performs Wi-Fi communication, thereby acquiring positional information on the terminal device 100. The positional information acquiring unit 153 provides the acquired positional information to the control unit 151.

The orientation determining unit 155 executes a predetermined operation on the basis of data acquired, for example, from the acceleration sensor 123 and/or the gyro sensor 125 included in the sensor 121, thereby determining the orientation of the terminal device 100. Additionally, a specific example of the orientation of the terminal device 100 which is determined by the orientation determining unit 155 will be discussed below. The orientation determining unit 155 provides a result obtained by determining the orientation to the control unit 151.

The environmental information acquiring unit 157 executes a predetermined operation on the basis of data acquired, for example, from the acceleration sensor 123, the temperature sensor 127 and/or the microphone 129 included in the sensor 121, thereby acquiring information that indicates the surrounding environment of the terminal device 100. For example, the environmental information acquiring unit 157 determines the vibration state of the terminal device 100 on the basis of data acquired from the acceleration sensor 123. Meanwhile, the environmental information acquiring unit 157 may also identify the temperature around the terminal device 100 on the basis of data acquired from the temperature sensor 127. When the sensor 121 further includes an air pressure sensor, a humidity sensor, a geomagnetic sensor, an optical sensor, and the like as discussed above, the environmental information acquiring unit 157 can further identify the altitude of the terminal device 100, the weather, the brightness and the like. The environmental information acquiring unit 157 provides the acquired information to the control unit 151.

The output data generating unit 159 generates various kinds of data to be output from the output unit 117 under the control of the control unit 151. For example, the output data generating unit 159 generates data of an image and a sound for navigation for running. The output data generating unit 159 may also generate sound data for reproducing a song. The output data generating unit 159 may further generate image data for displaying a GUI for controlling the navigation function and the music reproduction function.

The image display unit 161 causes the display 107 to display an image on the basis of image data generated by the output data generating unit 159. As discussed above, images that the image display unit 161 causes the display 107 to display include an image showing navigation information for running, and a GUI image for controlling each of the navigation function for running and the music reproduction function.

The sound output unit 163 causes the speaker 109 to output a sound on the basis of sound data generated by the output data generating unit 159. As discussed above, sounds that the sound output unit 163 causes the speaker 109 to output include a sound of navigation information for running (such as route guidance, running distances, and pace instructions) and a sound of a song to be reproduced.

### (1-4. Examples of Functions Selectively Implemented)

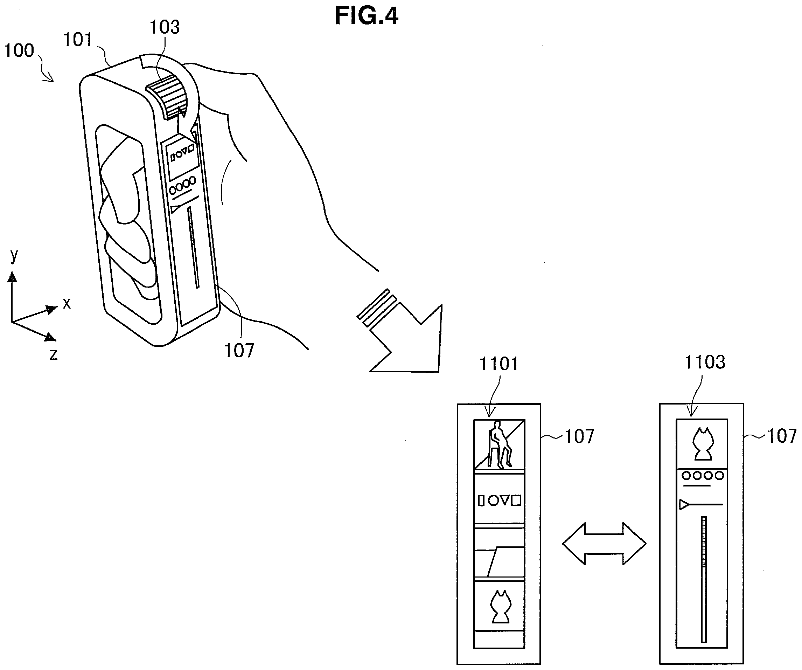

FIG. 4 is a diagram for describing a function implemented when a jog dial is operated with the terminal device held in portrait orientation in the first embodiment of the present disclosure. FIG. 4 illustrates that the terminal device 100 is set to a music reproduction mode while a user is holding the terminal device 100 in portrait orientation. The portrait orientation means an orientation of the terminal device 100 in which the longitudinal direction of the cuboid housing 101 is the substantially perpendicular direction (y axis direction in the figure) in the present embodiment. It can be determined that the terminal device 100 is in portrait orientation, on the basis of, for example, the inclination of the housing 101 detected by the gyro sensor 125. The inclination of the housing 101 may also be detected by the acceleration sensor 123.

Once the terminal device 100 is set to the music reproduction mode, the display 107 displays a song selection screen 1101 or a song reproduction screen 1103. Any of song icons arranged in one direction is selected in the song selection screen 1101, and a user can sequentially change the selected icon by rotating the jog dial 103. The icons may, for example, show songs in units of albums. Additionally, an operation via the touch panel 105 can also directly select a song icon.

Once a user depresses the jog dial 103 with any of the icons selected in the song selection screen 1101, the display 107 displays the song reproduction screen 1103 and the song corresponding to the selected icon begins to be reproduced. A user can cause the song selection screen 1101 to appear again by holding down the jog dial 103, and can select an icon for another song by rotating the jog dial 103. Additionally, an operation via the touch panel 105 such as touching a song icon or flicking the music reproducing screen can, for example, directly begin to reproduce the song or display the song selection screen.

If a user holds the terminal device 100 in portrait orientation and the terminal device 100 is set to the music reproduction mode, the functions to be implemented by an operation on the jog dial 103 may be further switched by the user running or stopping in the present embodiment. For example, detecting the vibration state of the terminal device 100 from a change in the acceleration of the housing 101 which is detected by the acceleration sensor 123 can determine whether a user is running or stopping. If the terminal device 100 strongly vibrates, it may be determined that a user is running. Alternatively, the acceleration sensor 123 may detect a change in the acceleration of the housing 101 and it may be determined that a user is running, on the basis of cyclic pitches of the change in the acceleration. A separately installed vibration sensor may be used to detect the vibration state of the terminal device 100.

In this case, it is possible to use each of the functions discussed above, for example, as functions implemented while a user is stopping (resting), and implement other functions while a user is running. For example, the display 107 displays the song reproduction screen 1103 during running, and a user controls the volume of a reproduced song by rotating the jog dial 103. If a user depresses the jog dial 103, the reproduction of a song is started/stopped. Furthermore, if a user holds down the jog dial 103, a song that is being reproduced at that time is skipped.

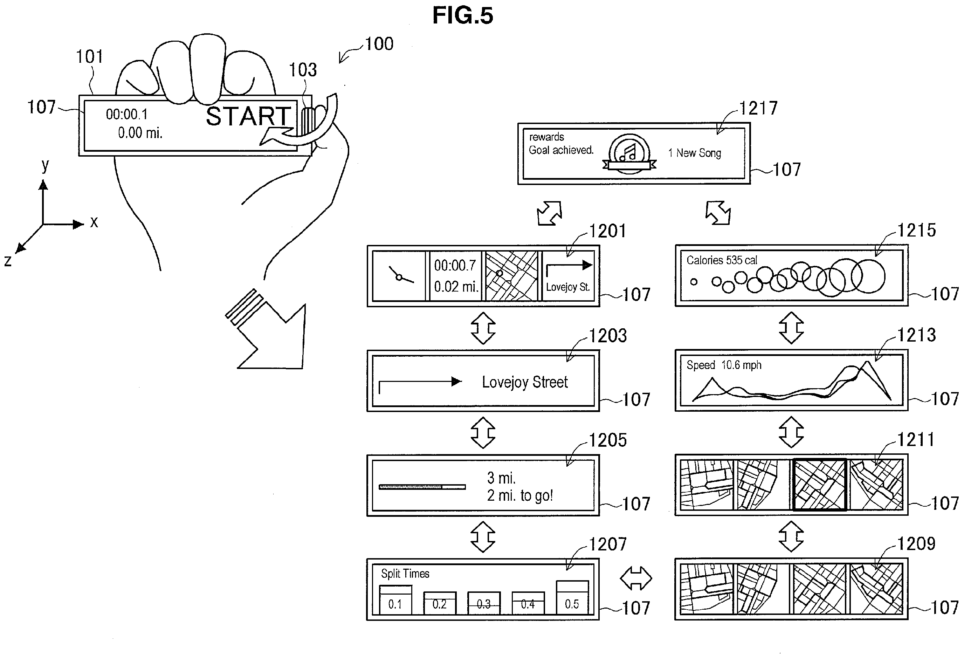

FIG. 5 is a diagram for describing a function implemented when a jog dial is operated with the terminal device held in landscape orientation in the first embodiment of the present disclosure. FIG. 5 illustrates that the terminal device 100 is set to a navigation mode while a user is holding the terminal device 100 in landscape orientation. The landscape orientation means an orientation of the terminal device 100 in which the longitudinal direction of the cuboid housing 101 is the substantially horizontal direction (direction of the x-y plane illustrated in the figure) in the present embodiment. It can be determined that the terminal device 100 is in landscape orientation, on the basis of, for example, the inclination of the housing 101 detected by the gyro sensor 125 or the acceleration sensor 123.

Once the terminal device 100 is set to the navigation mode, the display 107 displays navigation screens 1201 to 1217. A user can switch and display the respective navigation screens by rotating the jog dial 103. If a displayed navigation screen is a screen that allows a user to select something, the user depressing the jog dial 103 executes the selection. If not, a stopwatch is started/stopped. Additionally, an operation via the touch panel 105 such as a touch operation and a flick operation can directly switch the navigation screens and executes the selection in the navigation screen.

The navigation screens in the illustrated example are as follows: time; present position; route guidance display 1201; route guidance display 1203; desired distance and present distance display 1205; split time display 1207; route candidate display 1209; route selection display 1211; speed up down display 1213; consumed calorie display 1215; and reward song display 1217. These screens are examples, and other screens that provide various kinds of information may be displayed as the navigation screens. For example, as described in JP 2012-35071A and JP 2012-20134A, content of screens to be displayed as the navigation screens can be designed as necessary with reference to navigation information for running, which is currently already available, so that the detailed description will be omitted here.

### (1-5. Process Flow)

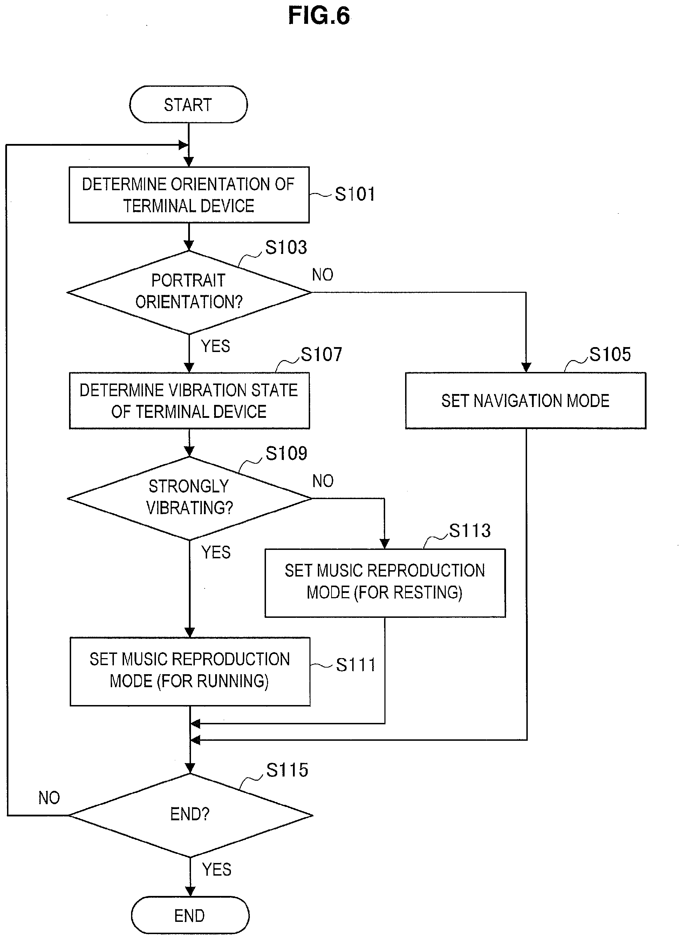

FIG. 6 is a flowchart illustrating an example of a process in the first embodiment of the present disclosure. FIG. 6 illustrates that the orientation determining unit 155 determines the orientation of the terminal device 100 first (step S101). The orientation determining unit 155 calculates the inclination angle of the housing 101, for example, from a value detected by the gyro sensor 125. For example, if the inclination angle falls within a predetermined range, the orientation determining unit 155 determines that the terminal device 100 is in portrait orientation/landscape orientation. If this determination is repeatedly made, a determination having so-called hysteresis may be made, in which the range of the inclination angle for determinations changes in accordance with which of portrait orientation and landscape orientation a result of the last determination indicates.

Next, a result of the determination in step S101 is provided to the control unit 151, and the control unit 151 has the process branch in accordance with whether or not the terminal device 100 is in portrait orientation (step S103). If the terminal device 100 is in portrait orientation (YES), the control unit 151 sets the terminal device 100 to the music reproduction mode, but a determination of vibration is further made before it in the illustrated example (step S107 to S113). To the contrary, if the terminal device 100 is not in portrait orientation, but the terminal device 100 is in landscape orientation (NO), the control unit 151 sets the terminal device 100 to the navigation mode as illustrated in FIG. 5 (step S105).

If the control unit 151 sets the terminal device 100 to the music reproduction mode, the environmental information acquiring unit 157 determines the vibration state of the terminal device 100 as an additional step (step S107). The environmental information acquiring unit 157 detects, for example, a change in the acceleration of the housing 101 from a value detected by the acceleration sensor 123. For example, short cycles and high amplitude of the change in the acceleration cause the environmental information acquiring unit 157 to determine that the terminal device 100 is strongly vibrating. If this determination is repeatedly made, a determination having so-called hysteresis may be made, in which thresholds for the cycles and the amplitude for determinations change in accordance with a result of the last determination as with the determination of the orientation.

Next, a result of the determination in step S107 is provided to the control unit 151, and the control unit 151 has the process branch in accordance with whether or not the terminal device 100 is strongly vibrating (step S109). If the terminal device 100 is strongly vibrating (YES), the control unit 151 determines that a user is running, and sets the terminal device 100 to the music reproduction mode for running (step S111). To the contrary, if the terminal device 100 is not strongly vibrating (NO), the control unit 151 determines that a user is resting, and sets the terminal device 100 to the music reproduction mode for resting (step S113). These processes are repeated until a predetermined end condition (the terminal device 100 is powered off, the function is finished by an operation of a user, and the like) is satisfied (step S115).

According to the first embodiment of the present disclosure described above, the functions to be implemented by rotating or depressing a jog dial of a terminal device are switched in accordance with the orientation of the terminal device. Different from switch using GUIs dependent on the sight, switching functions in accordance with the orientation of a terminal device allows the terminal device to implement a variety of functions in a simple procedure with an operation on the same operation unit even while the terminal device is carried by a user who is, for example, exercising or running.

### (2. Second Embodiment)

### (2-1. Configuration of Terminal Device)

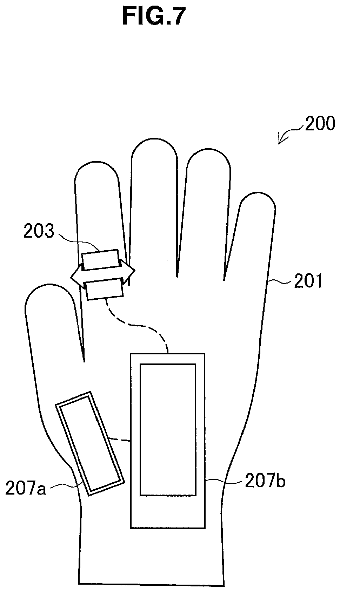

FIG. 7 is a plan of a terminal device according to a second embodiment of the present disclosure. FIG. 7 illustrates that a terminal device 200 includes a glove 201, a touch sensor 203, and displays 207a and 207b. The terminal device 200 is obtained by disposing the touch sensor 203 and the displays 207 on the surface of the glove 201, which is worn by a user, and may be regarded as a type of so-called wearable computer.

The touch sensor 203 is disposed at the base of the index finger of the glove 201, and can be operated by a user with the thumb when the user clenches the hand wearing the glove 201. The touch sensor 203 may also be operated with a finger of the opposite hand (which means the right hand since the left hand is wearing the glove 201 in the illustrated example) of the user to the hand wearing the glove 201. The touch sensor 203 may be, for example, a pressure touch sensor or an electrostatic touch sensor. The display 207a is disposed at the base of the thumb of the glove 201, while the display 207b is disposed at the back of the glove 201. For example, if the touch sensor 203 is a capacitive touch sensor, the glove 201 may be a fingerless glove or the glove 201 may have a conductive fiber disposed at the tip of a finger in a manner that the touch sensor 203 can be operated with the finger of the hand wearing the glove 201.

The touch sensor 203, the display 207a, and the display 207b have different housings. These housings are independently disposed on the surface of the glove 201, and connected to each other by a bus line or the like. Circuit parts such as a communication unit, a CPU, a memory, and a sensor discussed below are stored in any of the housings, or in a housing separately disposed on the surface of the glove 201 or in the glove 201. These circuit parts are stored in the housing of the display 207b in the illustrated example.

The touch sensor 203 is an operation unit that is operable in a specific direction. For example, the touch sensor 203 receives a slide operation in the in-plane direction of the sensor surface (direction parallel to the palm and crossing the index finger) and a touch operation (which is also referred to as depressing operation) in the vertical direction (direction vertical to the palm). The touch sensor 203 mainly receives an operation input to the terminal device 200, thereby allowing the terminal device 200 to be operated with a simple operation that can be performed, for example, by the thumb of the hand alone which is wearing the glove 201.

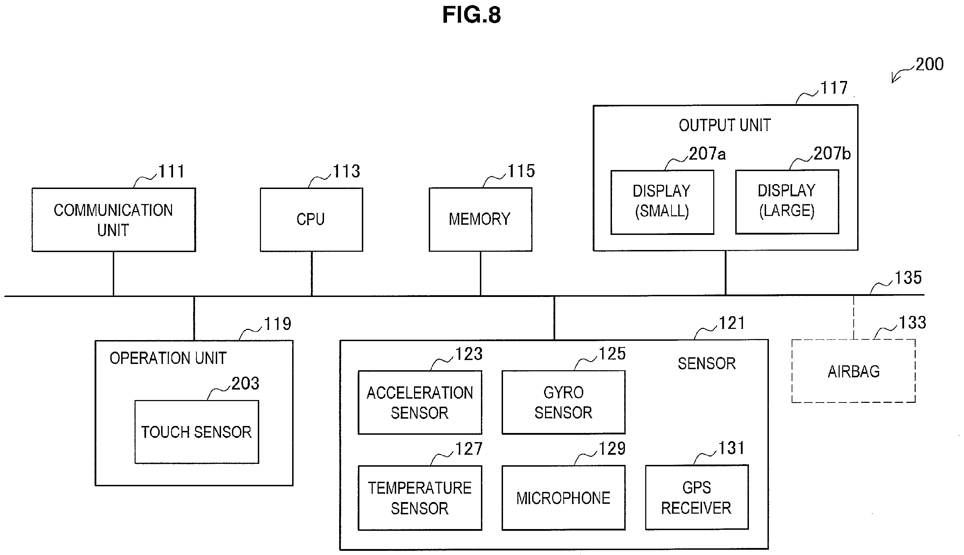

FIG. 8 is a block diagram schematically illustrating a hardware configuration of the terminal device according to the second embodiment of the present disclosure. FIG. 8 illustrates that the terminal device 200 includes the communication unit 111, the CPU 113, the memory 115, the output unit 117, the operation unit 119, and the sensor 121 as a hardware configuration. The terminal device 100 may further include an airbag 133 discussed below. These structural elements are connected to each other by the bus 135.

Among the hardware configuration of the terminal device 200, the communication unit 111, the CPU 113, the memory 115, and the sensor 121 are the same as those of the terminal device 100 according to the first embodiment, so that the detailed description will be omitted. In addition, the functional configuration of the terminal device 200 is also the same as the functional configuration of the terminal device 100 according to the first embodiment, so that the detailed description will be omitted.

The output unit 117 includes the display 207a and the display 207b. Each of the displays 207a and 207b displays an image under the control of the CPU 113. Additionally, the output unit 117 may further include a speaker.

The operation unit 119 includes the touch sensor 203. As discussed above, the touch sensor 203 is disposed on the surface of the glove 201, and acquires a slide operation and a touch (depressing) operation of a user in a predetermined direction. Additionally, the operation unit 119 may further include a touch panel installed in the display 207a or the display 207b.

### (2-2. Examples of Functions Selectively Implemented)

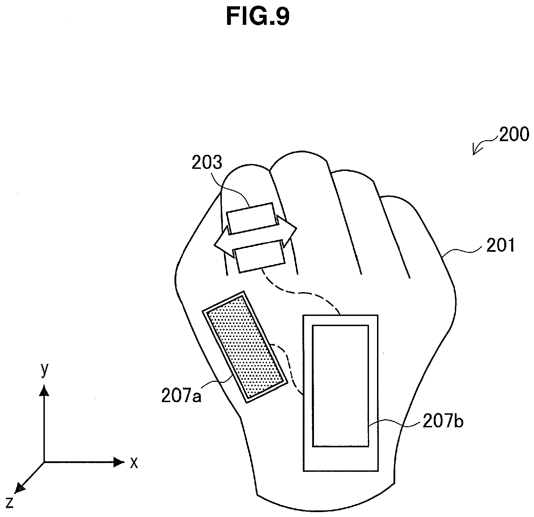

FIG. 9 is a diagram illustrating that a touch sensor is operated with the terminal device in portrait orientation in the second embodiment of the present disclosure. The portrait orientation means an orientation of the terminal device 200 in which the back surface of the glove 201 comes closer to the perpendicular plane (plane parallel to the y axis illustrated in the figure) in the present embodiment. It can be determined that the terminal device 200 is in portrait orientation, on the basis of, for example, the inclination of the housing (housing in which the gyro sensor 125 is stored. The housing may be, for example, the housing of the display 207b) detected by the gyro sensor 125. The inclination of the housing may also be detected by the acceleration sensor 123.

If the terminal device 200 is in portrait orientation, the terminal device 200 is set to the music reproduction mode as in the first embodiment. Once the terminal device 200 is set to the music reproduction mode, the display 207a displays a song selection screen or a song reproduction screen in the present embodiment. Although it is not illustrated, these screens may be the same, for example, as the song selection screen 1101 and the song reproduction screen 1103 in the first embodiment. Any of song icons arranged in one direction is selected in the song selection screen, and a user can sequentially change the selected icon by a slide operation on the touch sensor 203.

Once a user performs a short touch operation on the touch sensor 203 with any of the icons selected in the song selection screen, the display 207a displays the song reproduction screen and the song corresponding to the selected icon begins to be reproduced. If a user performs a long touch operation (holding-down operation) on the touch sensor 203, the display 207a displays the song selection screen again. Meanwhile, if a user performs a slide operation on the touch sensor 203, the user can select an icon for another song.

Moreover, if the terminal device 200 is in portrait orientation, the functions to be implemented by an operation on the touch sensor 203 may also be switched by a user running or stopping in the present embodiment. For example, detecting the vibration state of the terminal device 200 from a change in the acceleration of the housing which is detected by the acceleration sensor 123 can determine whether a user is running or stopping. The vibration state of the terminal device 200 can also be used as information indicating, for example, the swing of the arms while a user is running.

In that case, it is possible to use each of the functions discussed above, for example, as functions implemented while a user is stopping (resting), and implement other functions while a user is running. For example, the display 207a displays the song reproduction screen during running, and a user controls the volume of a reproduced song by performing a slide operation on the touch sensor 203. If a user performs a short touch operation on the touch sensor 203, the reproduction of a song is started/stopped. Moreover, if a user performs a long touch operation on the touch sensor 203, a song that is being reproduced at that time is skipped.

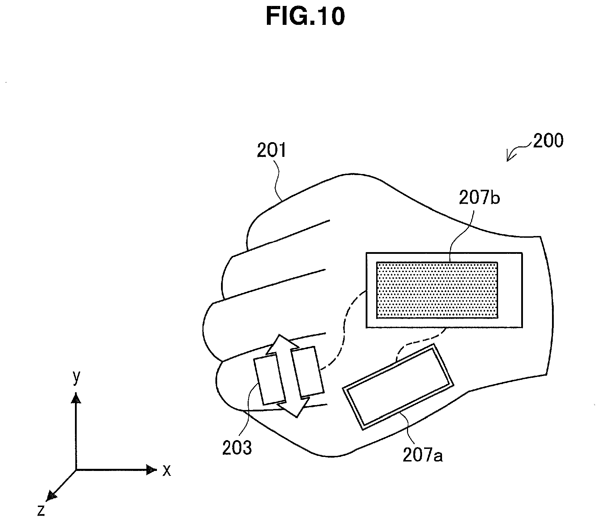

FIG. 10 is a diagram illustrating that a touch sensor is operated with the terminal device in landscape orientation in the second embodiment of the present disclosure. The landscape orientation means an orientation of the terminal device 200 in which the back surface of the glove 201 comes closer to the horizontal plane (x-z plane illustrated in the figure) in the present embodiment. It can be determined that the terminal device 200 is in landscape orientation, on the basis of, for example, the inclination of the housing detected by the gyro sensor 125 or the acceleration sensor 123.

If the terminal device 200 is in landscape orientation, the terminal device 200 is set to the navigation mode as in the first embodiment. Once the terminal device 200 is set to the navigation mode, the display 207b displays navigation screens in the present embodiment. Although it is not illustrated, the navigation screens may be the same, for example, as the navigation screens 1201 to 1217 in the first embodiment. A user can switch and display the respective navigation screens by performing a slide operation on the touch sensor 203. If a displayed navigation screen is a screen that allows a user to select something, the user performing a short touch operation on the touch sensor executes the selection. If not, a stopwatch is started/stopped.

Switching functions in accordance with the orientation of the terminal device 200 in the present embodiment described above is basically the same as that of the first embodiment. However, the present embodiment is different from the first embodiment in that the functions to be implemented in response to an operation (slide operation or touch operation) on the touch sensor 203 in a predetermined direction in accordance with the orientation of the terminal device 200 are not only switched, but a display that displays a variety of screens is also switched to the display 207a when the terminal device 200 is in portrait orientation and to the display 207b when the terminal device 200 is in landscape orientation. As with the terminal device 200, a terminal device including a plurality of displays that are disposed at different positions and face in different directions can display an image on a display that is easier for a user to watch by switching the displays to be used in accordance with the orientation of the terminal device 200.

The process flow is the same as that of the first embodiment described with reference to FIG. 6, so that the repeated description will be omitted here.

### (2-3. Modified Example)

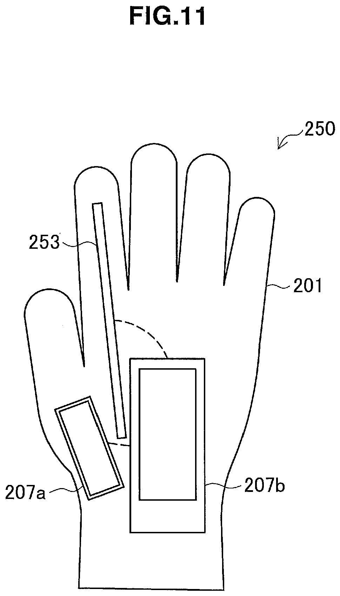

FIG. 11 is a diagram for describing a modified example of the second embodiment of the present disclosure. FIG. 11 illustrates that a terminal device 250 according to a modified example includes the glove 201, a strain gauge 253, and the displays 207a and 207b. The terminal device 250 is obtained by installing the strain gauge 253 to the terminal device 200 instead of the touch sensor 203.

The strain gauge 253 is disposed on the surface of the glove 201 (any of the palm or the back of the hand) from the index finger to the carpal region. The strain gauge 253 disposed, for example, on the palm surface of the glove 201 is compressed when a user clenches the hand wearing the glove 201, and stretched when the hand opens. Meanwhile, the strain gauge 253 disposed on the back surface of the glove 201 is stretched when a user clenches the hand wearing the glove 201, and compressed when the hand opens. The strain gauge 253 detects this kind of deformation, thereby allowing acts of a user for clenching and opening the hand wearing the glove 201 to be each acquired as an operation. Moreover, a threshold may be set for the amount of compression or stretches, and it may be separately detected that a user tightly clenches the hand wearing the glove 201.

The strain gauge 253 is also an operation unit that is operable in a specific direction. For example, the strain gauge 253 receives a deformation operation in the compression-stretch direction which is performed by a user clenching and opening the hand wearing the glove 201. Detecting acts of a user for clenching and opening his or her hand as operation inputs allows the user to operate the terminal device 250 with a smooth act, for example, even when the user is exercising or running.

The acts to be selectively performed when the terminal device 250 is in portrait orientation and landscape orientation in the present modified example are the same as those described with reference to FIGS. 9 and 10. Acts of a user for clenching and opening the hand wearing the glove 201 correspond to a slide operation on the touch sensor 203 in the above-described example, while an act of a user for tightly clenching the hand wearing the glove 201 corresponds to a short touch operation on the touch sensor 203.

### (3. Third Embodiment)

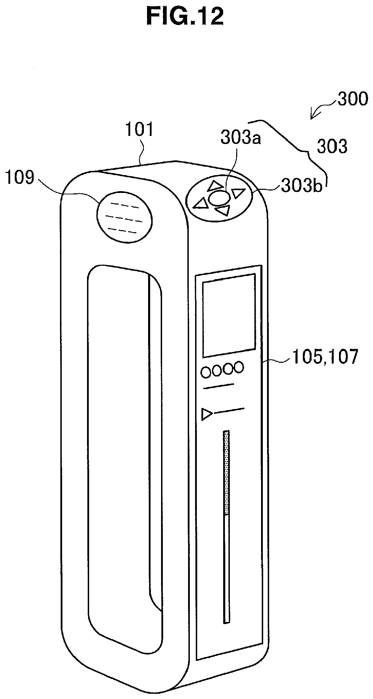

FIG. 12 is a perspective view of a terminal device according to a third embodiment of the present disclosure. FIG. 12 illustrates that a terminal device 300 includes the housing 101, buttons 303, the touch panel 105, the display 107, and the speaker 109. The terminal device 300 according to the present embodiment is different from the terminal device 100 according to the first embodiment in that the terminal device 300 according to the present embodiment includes the buttons 303 as an operation unit, but the terminal device 300 is the same as the terminal device 100 in terms of the other points. The detailed description for the structural elements other than the buttons 303 will be thus omitted here.

The buttons 303 are installed on the surface of the housing 101 (at the corner in the illustrated example), and depressed by a thumb of a user when the terminal device 100 is held by the user. Additionally, the buttons 303 may also be operated by a finger of the opposite hand to the hand with which a user holds the housing 101. The buttons 303 include a center button 303a and direction buttons 303b. The center button 303a is installed at the center of the buttons 303, and receives a depressing operation in the direction vertical to the buttons 303. The direction buttons 303b are installed around the center button 303a, and similarly receive a depressing operation in the direction vertical to the buttons 303. An operation received by the direction buttons 303b is an operation of indicating any of the four directions including the up direction, the down direction, the left direction, and the right direction as the buttons 303 face. Accordingly, the operation may be interpreted as an operation for each of the up direction, the down direction, the left direction, and the right direction.

As with the terminal device 100 according to the first embodiment, the terminal device 300 is set to the music reproduction mode in portrait orientation, and the navigation mode in landscape orientation. For example, among the buttons 303, a start/stop function for song reproduction is assigned to the center button 303a, a volume control function is assigned to the up and down direction buttons 303b, and a skip and fast-forwarding function for a song is assigned to the left and right buttons 303b in the music reproduction mode. Meanwhile, among the buttons 303, a function of switching navigation screens is assigned to the direction buttons 303b, and a function of performing selection on a navigation screen or a start/stop function for a stopwatch is assigned to the center button 303a in the navigation mode. Additionally, these functions can also be implemented by an operation via the touch panel 105.

### (4. Fourth Embodiment)

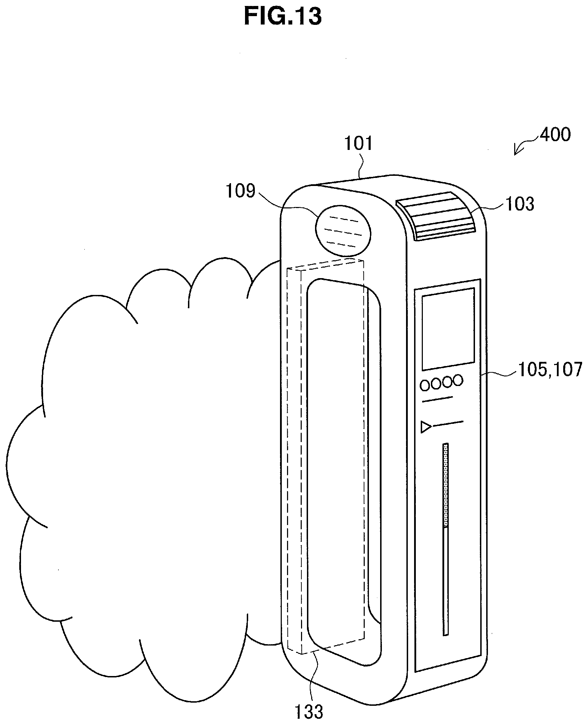

FIG. 13 is a perspective view of a terminal device according to a fourth embodiment of the present disclosure. FIG. 13 illustrates that a terminal device 400 includes the housing 101, the jog dial 103, the touch panel 105, the display 107, the speaker 109, and the airbag 133. The terminal device 400 according to the present embodiment is different from the terminal device 100 according to the first embodiment in that the terminal device 400 according to the present embodiment includes the airbag 133, but the terminal device 400 is the same as the terminal device 100 in terms of the other points. The terminal device 400 may have the parts other than the airbag 133 configured in the same way as those of the terminal device 200 according to the second embodiment or the terminal device 300 according to the third embodiment. The detailed description for the structural elements other than the airbag 133 will be thus omitted here.

For example, as illustrated, the airbag 133 is installed on the opposite side to the display 107 of the housing 101, and cushions the impact on a user or the terminal device 100 by being activated when the user falls down. The airbag 133 is controlled, for example, by the control unit 151 implemented by the CPU 113 (see FIGS. 2 and 8 and the like). In this case, the control unit 151 activates the airbag 133 if the environmental information acquiring unit 157 detects acceleration exceeding a threshold.

The control unit 151 may additionally activate the airbag 155, cause the display 107 to display a message transmission screen, and allow an operation of transmitting a message to an emergency contact address to be performed. Alternatively, the control unit 151 may activate the airbag 155, and automatically transmit a message to an emergency contact address. Messages transmitted to an emergency contact address in these two examples may automatically include the position of a user and time.

The airbags 133 may be installed at a plurality of positions on the housing 101. In this case, the control unit 151 may identify the direction in which a user falls down on the basis of a result obtained by the environmental information acquiring unit 157 acquiring the acceleration, and activate the airbag 133 corresponding to the direction. A nozzle that emits an air jet may be installed instead of or in combination with the airbag 133.

### (5. Fifth Embodiment)

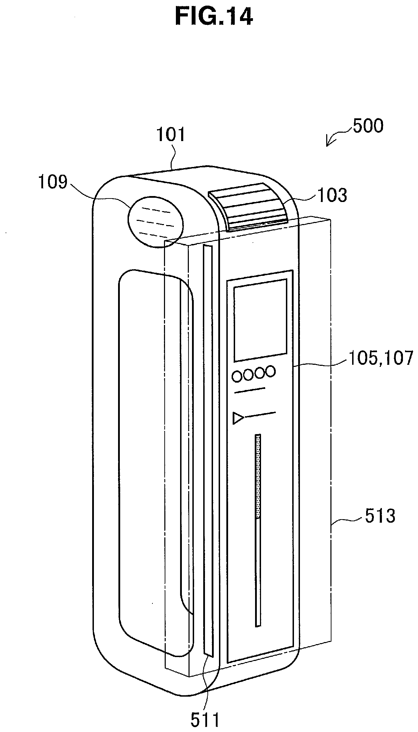

FIG. 14 is a perspective view of a terminal device according to a fifth embodiment of the present disclosure. FIG. 14 illustrates that a terminal device 500 includes the housing 101, the jog dial 103, the touch panel 105, the display 107, the speaker 109, and an attaching and detaching groove 511. The terminal device 500 according to the present embodiment is different from the terminal device 100 according to the first embodiment in that the terminal device 500 according to the present embodiment includes the attaching and detaching groove 511, but the terminal device 500 is the same as the terminal device 100 in terms of the other points. The terminal device 500 may have the parts other than the attaching and detaching groove 511 configured in the same way as those of any of the terminal devices 200 to 400 according to the second to fourth embodiments. The detailed description for the structural elements other than the attaching and detaching groove 511 will be thus omitted here.

The attaching and detaching groove 511 is made on the surface of the housing 101, and engages with an attaching and detaching unit of another terminal device 513. The other terminal device 513 can be hereby attached to the terminal device 500. The size of the other terminal device 513 is not limited in particular, but the other terminal device 513 may have a size, for example, large enough to cover the whole of the display 107 as in the illustrated example. The other terminal device 513 may cover only a part of the display 107, or may also be attached to the terminal device 100 without covering the display 107 in another example.

An electrical contact point may be installed on the attaching and detaching groove 511. In this case, an attaching and detaching unit of the other terminal device 513 engages with the attaching and detaching groove 511, thereby coupling the terminal device 500 to the other terminal device 513 not only structurally, but also electrically. Information is transmitted and received via this electrical coupling, thereby allowing the other terminal device 513 to implement a part of the functions of the terminal device 500. For example, if a GPS receiver and an acceleration sensor are mounted on the other terminal device 513, the terminal device 500 can detect positional information and the inclination of the housing 101 with the detection results of these sensors. The terminal device 500 may ask a processor of the other terminal device 513 to perform a part or all of the operation processes to be performed by the CPU 113. The terminal device 500 may also use a display and a speaker of the other terminal device 513 instead of providing information to a user via the display 107 and the speaker 109.

### (6. Sixth Embodiment)

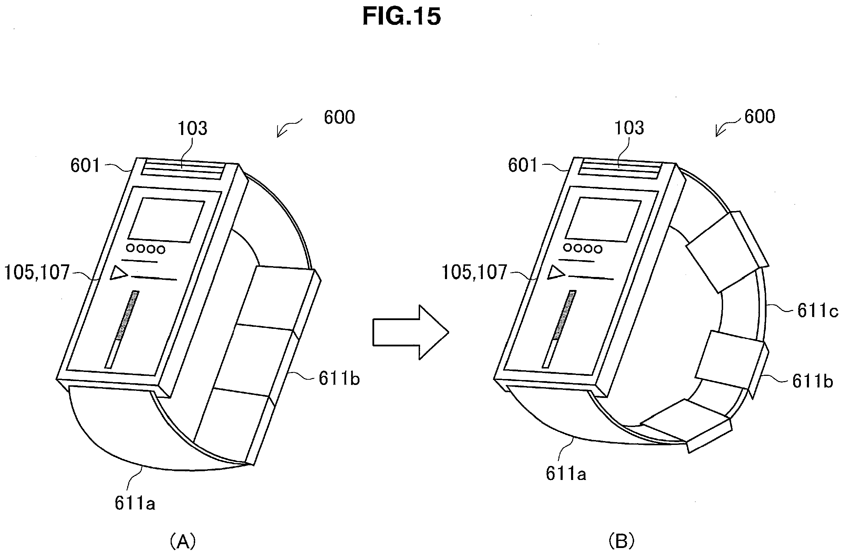

FIG. 15 is a perspective view of a terminal device according to a sixth embodiment of the present disclosure. FIG. 15 illustrates that a terminal device 600 includes a housing 601, the jog dial 103, the touch panel 105, the display 107, and a belt 611. The terminal device 600 according to the present embodiment is different from the terminal device 100 according to the first embodiment in that the shape of the housing 601 is different and the terminal device 600 according to the present embodiment includes the belt 611, but the terminal device 600 is the same as the terminal device 100 in terms of the other points. The terminal device 600 may have the parts other than the housing 601 and the belt 611 configured in the same way as those of any of the terminal devices 300 to 500 according to the third to fifth embodiments. The detailed description for the structural elements other than the housing 601 and the belt 611 will be thus omitted here.

The housing 601 is a rectangular plate, and has the belt 611 connected to both of the longitudinal sides. The belt 611 includes a connection unit 611a, a rigidity unit 611b, and an extendable unit 611c. A plurality of rigidity units 611b are disposed on the opposite side to the housing 601 across the connection unit 611a. The rigidity units 611b are coupled by the extendable unit 611c.

If the extendable unit 611c contracts and the neighboring rigidity units 611b tightly adhere to each other as illustrated in FIG. 15(A), the tightly adhering rigidity units 611b forms a grip handle. Accordingly, it is easy for a user to grip and use the terminal device 600 with his or her hand as with the terminal device 100 according to the first embodiment. To the contrary, if the extendable unit 611c extends and the neighboring rigidity units 611 are separated from each other as illustrated in FIG. 15(B), the whole of the belt 611 serves as an extendable belt part. Accordingly, it is easy for a user to wind the terminal device 600 on the arm or the wrist of the user.

### (7. Seventh Embodiment)

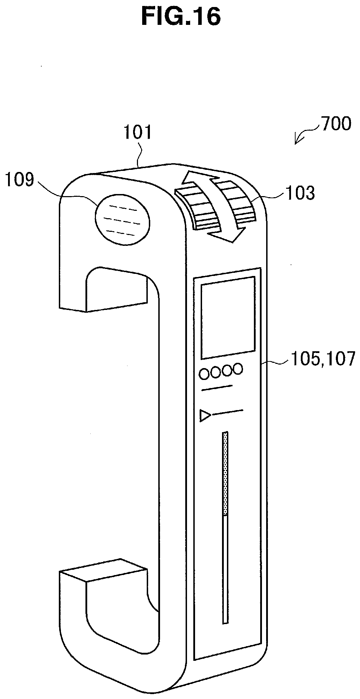

FIG. 16 is a perspective view of a terminal device according to a seventh embodiment of the present disclosure. FIG. 16 illustrates that a terminal device 700 includes a housing 701, the jog dial 103, the touch panel 105, the display 107, and the speaker 109. The terminal device 700 according to the present embodiment is different from the terminal device 100 according to the first embodiment in the shape of the housing 701, but the terminal device 700 is the same as the terminal device 100 in terms of the other points. Additionally, the terminal device 700 may have the parts other than the housing 701 configured in the same way as those of any of the terminal devices 300 to 500 according to the third to fifth embodiments. The detailed description for the structural elements other than the housing 701 will be thus omitted here.

The housing 701 has a shape obtained by cutting out a part on the opposite side to, across the longitudinal hole, the display 107 of the housing 101 of the terminal device 100 according to the first embodiment. For example, if a user grips a part on the side of the display 107 as in the examples illustrated in FIGS. 4 and 5, a part on the opposite side is unnecessary in some cases. Cutting out a part of the housing 701 which is unnecessary if a user grips a part on the side of the display 107 reduces the weight of the terminal device 700.

### (8. Modified Example)

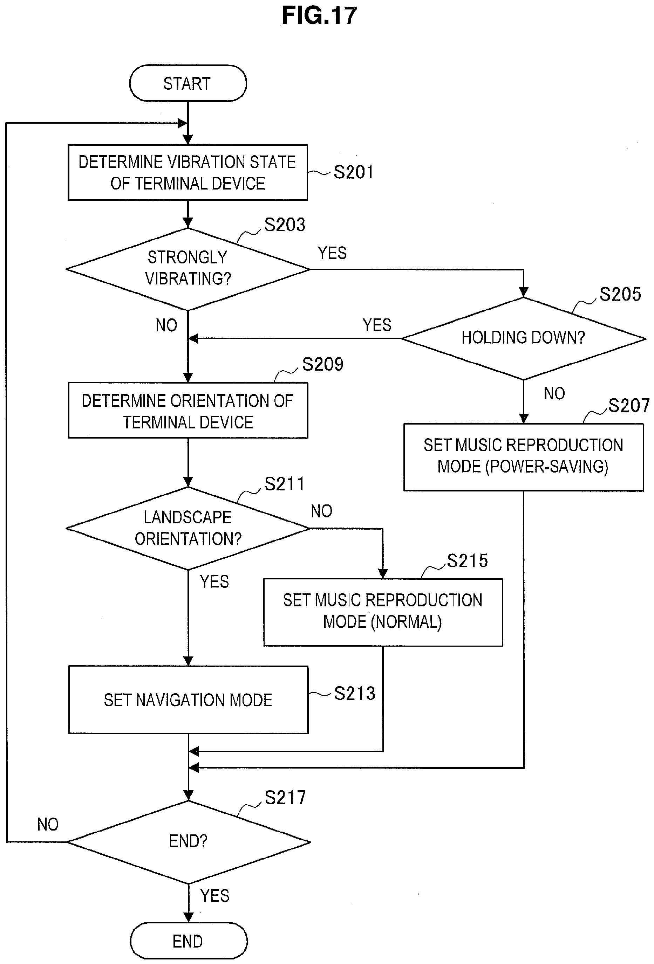

Next, a modified example common to each of the embodiments of the present disclosure will be described with reference to FIG. 17.

FIG. 17 is a flowchart illustrating a process in a modified example common to each of the embodiments of the present disclosure. The terminal device 100 according to the first embodiment will be used below as an example, but this process is also applicable to the terminal devices 200 to 700 according to the second to seventh embodiments. FIG. 17 illustrates that the environmental information acquiring unit 157 determines the vibration state of the terminal device 100 first (step S201). The environmental information acquiring unit 157 detects, for example, a change in the acceleration of the housing 101 from a value detected by the acceleration sensor 123. For example, short cycles and high amplitude of the change in the acceleration cause the environmental information acquiring unit 157 to determine that the terminal device 100 is strongly vibrating.

Next, a result of the determination in step S201 is provided to the control unit 151, and the control unit 151 has the process branch in accordance with whether or not the terminal device 100 is strongly vibrating (step S203). If the terminal device 100 is strongly vibrating (YES), the control unit 151 determines that a user is running, and basically sets the terminal device 100 to a power-saving music reproduction mode. The power-saving music reproduction mode is a music reproduction mode for detecting a touch operation on the touch panel 105, stopping the display 107 from displaying a GUI, and saving power. The jog dial 103 is mainly used to operate the terminal device 100 in this mode.

An exception is, however, made to the process performed while a user is running in the illustrated example. Before setting the power-saving music reproduction mode, the control unit 151 determines whether or not a user is holding down the jog dial 103 (step S205). If the jog dial 103 is not held down (NO), the control unit 151 sets the terminal device 100 to the power-saving music reproduction mode (step S207). To the contrary, if the jog dial 103 is held down (YES), the control unit 151 recognizes it as a kind of unlock operation and proceeds to the process (step S209) performed if the terminal device 100 does not strongly vibrate in step S203.

Meanwhile, if it is determined in step S203 that the terminal device 100 does not strongly vibrate (NO), the control unit 151 determines that a user is resting and the orientation determining unit 155 determines the orientation of the terminal device 100 (step S209). The orientation determining unit 155 calculates the inclination angle of the housing 101, for example, from a value detected by the gyro sensor 125. For example, if the inclination angle falls within a predetermined range, the orientation determining unit 155 determines that the terminal device 100 is in portrait orientation/landscape orientation. Additionally, as determinations of the vibrate state and the orientation of the terminal device 100 according to this modified example, a determination having hysteresis may be made as described in the first embodiment.

Next, a result of the determination in step S209 is provided to the control unit 151, and the control unit 151 has the process branch in accordance with whether or not the terminal device 100 is in landscape orientation (step S211). If the terminal device 200 is in landscape orientation (YES), the control unit 151 sets the terminal device 100 to the navigation mode (step S213). To the contrary, if the terminal device 100 is not in landscape orientation, but the terminal device 100 is in portrait orientation (YES), the control unit 151 sets the terminal device 100 to the music reproduction mode. The music reproduction mode set here is a normal music reproduction mode for detecting a touch operation on the touch panel 105, and causing the display 107 to display a GUI. These processes are repeated until a predetermined end condition (the terminal device 100 is powered off, the function is finished by an operation of a user, and the like) is satisfied (step S217).

The orientation of the terminal device 100 is not determined in the process according to the present modified example while a user is running. Accordingly, for example, even when a user is running and unintentionally holding the terminal device 100 in landscape orientation, such a malfunction is prevented that the reproduction of music is stopped and navigation begins. If a user holds the terminal device 100 in landscape orientation for the purpose of switching the mode while the user is running, the user can switch the terminal device 100 to the navigation mode by recognizing it as an unlock operation that down the jog dial 103 is held down.

For example, as another modified example of the an embodiment of the present embodiment, the swing, the speed, or the angle of the arms of a running user may be detected on the basis of the acceleration detected by the acceleration sensor 123, and an alert may be output if each of them falls below a threshold. An integrated circuit (IC) card may be mounted on a terminal device to allow for settlement with electronic money and individual authentication as still another modified example.

### (9. Supplement)

The embodiments of the present disclosure may include, for example, an information processing device (terminal device) as described above, a system including an information device, an information processing method executed by the information processing device or the system, a program for causing the information processing device to function, and a non-transitory tangible medium having the program recorded thereon.

The preferred embodiments of the present disclosure have been described above with reference to the accompanying drawings, whilst the present disclosure is not limited to the above examples, of course. A person skilled in the art may find various alterations and modifications within the scope of the appended claims, and it should be understood that they will naturally come under the technical scope of the present disclosure.

### Reference Signs List

- 100, 200, 250, 300, 400, 500, 600, 700: terminal device
- 101, 601, 701: housing
- 103: jog dial
- 107, 207: display
- 111: communication unit
- 113: CPU
- 115: memory
- 117: output unit
- 119: operation unit
- 121: sensor
- 133: airbag
- 151: control unit
- 153: positional information acquiring unit
- 155: orientation determining unit
- 157: environmental information acquiring unit
- 201: glove
- 303: touch sensor
- 253: strain gauge
- 303: button
- 511: attaching and detaching groove
- 611: belt

## Claims

1. A terminal device (100, 200, 250, 300, 400, 500, 600, 700) comprising:
an operation unit of hardware (103, 203, 253, 303) operable in a specific direction;
a sensor unit (121);
an orientation determining unit (155) configured to determine an orientation of the terminal device (100, 200, 250, 300, 400, 500, 600, 700) including the operation unit of hardware (103, 203, 253, 303) on the basis of data acquired from the sensor unit (121);
an environmental information acquiring unit (157) configured to determine a vibration state of the terminal device (100, 200, 250, 300, 400, 500, 600, 700) on the basis of acceleration data acquired from the sensor unit (121); and
a control unit (151) configured to switch a function to be implemented in response to an operation on the operation unit of hardware (103, 203, 253, 303) in accordance with the orientation,
wherein the control unit (151) is configured to further switch the function in accordance with the vibration state, and
wherein, when the operation unit of hardware (103, 203, 253, 303) detects an operation having a predetermined pattern, the control unit (151) switches the function in accordance with the orientation irrespective of the vibration state.

2. The terminal device (100, 200, 250, 300, 400, 500, 600, 700) according to claim 1,
wherein the environmental information acquiring unit (157) determines the vibration state on the basis of a change in acceleration of a housing (101, 601, 701) of the terminal device (100, 200, 250, 300, 400, 500, 600, 700).

3. The terminal device (100, 200, 250, 300, 400, 500, 600, 700) according to claim 1,
wherein the orientation determining unit (155) determines the orientation on the basis of an inclination angle of a housing (101, 601, 701) of the terminal device (100, 200, 250, 300, 400, 500, 600, 700).

4. The terminal device (100, 200, 250, 300, 400, 500, 600, 700) according to claim 1,
wherein the operation unit of hardware (103, 203, 253, 303) includes a jog dial (103) that detects a rotating operation or a depressing operation, and/or
wherein the operation unit of hardware (103, 203, 253, 303) includes a touch sensor (203) not combined with a GUI that detects a slide operation or a depressing operation, and/or
wherein the operation unit of hardware (103, 203, 253, 303) includes a strain gauge (253) that detects compression or a stretch, and/or
wherein the operation unit of hardware (103, 203, 253, 303) includes a button (303).

5. The terminal device (100, 200, 250, 300, 400, 500, 600, 700) according to claim 1, further comprising:
a housing (101, 601, 701) capable of being carried or worn by a user while the user is running,
wherein the control unit (151) switches implementation of a function related to music reproduction and implementation of a function related to navigation for running in response to the operation on the operation unit of hardware (103, 203, 253, 303).

6. The terminal device (100, 200, 250, 300, 400, 500, 600, 700) according to claim 1, further comprising:
a housing (101, 601, 701); and
a belt (611) configured to make a ring along with the housing (101, 601, 701),
wherein the belt (611) includes a plurality of rigidity units (611b) and an extendable unit (611c) disposed between the respective rigidity units (611b),
wherein the extendable unit (611c) contracts and makes the plurality of rigidity units (611b) tightly adhere to each other to form a grip handle, and
wherein the extendable unit (611c) extends and makes the plurality of rigidity units (611b) separated from each other to form an extendable belt part.

7. The terminal device (100, 200, 250, 300, 400, 500, 600, 700) according to claim 1, further comprising:
a housing (101, 601, 701); and
a coupling unit on a surface of the housing (101, 601, 701), the coupling unit being configured to be structurally and electrically coupled to another terminal device (100, 200, 250, 300, 400, 500, 600, 700).

8. The terminal device (100, 200, 250, 300, 400, 500, 600, 700) according to claim 1, further comprising:
an acceleration detecting unit (123) configured to detect acceleration of a housing (101, 601, 701) of the terminal device (100, 200, 250, 300, 400, 500, 600, 700); and
an airbag (133) configured to cushion impact on a user of the terminal device (100, 200, 250, 300, 400, 500, 600, 700) or the terminal device (100, 200, 250, 300, 400, 500, 600, 700),
wherein the control unit (151) activates the airbag (133) on the basis of the acceleration.

9. The terminal device (100, 200, 250, 300, 400, 500, 600, 700) according to claim 1, further comprising:
a plurality of displays (207a, 207b),
wherein the control unit (151) switches a display of the displays that displays an image, in accordance with the orientation.

10. A control method for a terminal device (100, 200, 250, 300, 400, 500, 600, 700), the control method comprising:
detecting an operation on an operation unit of hardware (103, 203, 253, 303) operable in a predetermined direction;
determining an orientation of a terminal device (100, 200, 250, 300, 400, 500, 600, 700) including the operation unit (103, 203, 253, 303) on the basis of data acquired from a sensor unit (121);
determining a vibration state of the terminal device (100, 200, 250, 300, 400, 500, 600, 700) on the basis of acceleration data acquired from the sensor unit (121); and
switching a function to be implemented in response to the operation in accordance with the orientation on the basis of data acquired from the sensor unit (121), wherein
the function is further switched or not in accordance with the vibration state, and wherein,
when the operation unit of hardware (103, 203, 253, 303) detects an operation having a predetermined pattern, the function is switched in accordance with the orientation irrespective of the vibration state.

11. A computer program comprising instructions which, when the program is executed by the terminal device of claim 1, cause the terminal device to carry out the method steps of claim 10.

## Patentansprüche

1. Endgerät (100, 200, 250, 300, 400, 500, 600, 700, umfassend:
eine Hardware-Betätigungseinheit (103, 203, 253, 303), die in eine bestimmte Richtung betätigt werden kann,
eine Sensoreinheit (121),
eine Ausrichtungsbestimmungseinheit (155), die dafür konfiguriert ist, auf der Basis von Daten, die von der Sensoreinheit (121) erfasst werden, eine Ausrichtung des die Hardware-Betätigungseinheit (103, 203, 253, 303) umfassenden Endgeräts (100, 200, 250, 300, 400, 500, 600, 700) zu bestimmen,
eine Umgebungsinformationen-Erfassungseinheit (157), die dafür konfiguriert ist, auf der Basis von Beschleunigungsdaten, die von der Sensoreinheit (121) erfasst werden, einen Vibrationszustand des Endgeräts (100, 200, 250, 300, 400, 500, 600, 700) zu bestimmen; und
eine Steuereinheit (151), die dafür konfiguriert ist, in Reaktion auf ein Betätigen der Hardware-Betätigungseinheit (103, 203, 253, 303) gemäß der Ausrichtung eine zu implementierende Funktion umzuschalten, und
wobei die Steuereinheit (151) dazu ausgerichtet ist, die Funktion ferner gemäß dem Vibrationszustand umzuschalten, und
wobei, wenn die Hardware-Betätigungseinheit (103, 203, 253, 303) eine Betätigung mit einem vorbestimmten Muster erkennt, die Steuereinheit (151) die Funktion entsprechend der Ausrichtung unabhängig von dem Vibrationszustand umschaltet.

2. Endgerät (100, 200, 250, 300, 400, 500, 600, 700) nach Anspruch 1,
wobei die Umgebungsinformationen-Erfassungseinheit (157) den Vibrationszustand auf der Basis einer Beschleunigungsänderung eines Gehäuses (101, 601, 701) des Endgeräts (100, 200, 250, 300, 400, 500, 600, 700) bestimmt.

3. Endgerät (100, 200, 250, 300, 400, 500, 600, 700) nach Anspruch 1,
wobei die Ausrichtungsbestimmungseinheit (155) die Ausrichtung auf der Basis eines Neigungswinkels eines Gehäuses (101, 601, 701) des Endgeräts (100, 200, 250, 300, 400, 500, 600, 700) bestimmt.

4. Endgerät (100, 200, 250, 300, 400, 500, 600, 700) nach Anspruch 1,
wobei die Hardware-Betätigungseinheit (103, 203, 253, 303) ein Jog Dial (103) umfasst, das eine Drehbetätigung oder eine Drückbetätigung erkennt, und/oder
wobei die Hardware-Betätigungseinheit (103, 203, 253, 303) einen nicht mit einer GUI kombinierten Berührungssensor (203) umfasst, der eine Gleitbetätigung oder eine Drückbetätigung erkennt, und/oder
wobei die Hardware-Betätigungseinheit (103, 203, 253, 303) einen Dehnungsmesser (253) umfasst, der ein Zusammendrücken oder ein Auseinanderziehen erkennt, und/oder
wobei die Hardware-Betätigungseinheit (103, 203, 253, 303) einen Knopf (303) umfasst.

5. Endgerät (100, 200, 250, 300, 400, 500, 600, 700) nach Anspruch 1, ferner umfassend:
ein Gehäuse (101, 601, 701), das dazu geeignet ist, von einem Anwender getragen oder in der Hand getragen zu werden, während der Anwender läuft,
wobei die Steuereinheit (151) in Reaktion auf das Betätigen der Hardware-Betätigungseinheit (103, 203, 253, 303) die Ausführung einer Musikwiedergabefunktion und die Ausführung einer Lauf-Navigationsfunktion umschaltet.

6. Endgerät (100, 200, 250, 300, 400, 500, 600, 700) nach Anspruch 1, ferner umfassend:
ein Gehäuse (101, 601, 701) und
einen Gurt (611), der dafür konfiguriert ist, zusammen mit dem Gehäuse (101, 601, 701) einen Ring zu bilden,
wobei der Gurt (611) mehrere Steifigkeitseinheiten (611b) und eine dehnbare Einheit (611c) umfasst, die zwischen den entsprechenden Steifigkeitseinheiten (611b) angeordnet ist,
wobei sich die dehnbare Einheit (611c) zusammenzieht und dafür sorgt, dass die mehreren Steifigkeitseinheiten (611b) eng aneinanderhaften, um einen Griff zu bilden, und
wobei sich die dehnbare Einheit (611c) ausdehnt und dafür sorgt, dass die mehreren Steifigkeitseinheiten (611b) voneinander getrennt werden, um einen dehnbaren Gurtteil zu bilden.

7. Endgerät (100, 200, 250, 300, 400, 500, 600, 700) nach Anspruch 1, ferner umfassend:
ein Gehäuse (101, 601, 701) und
eine Kupplungseinheit auf einer Oberfläche des Gehäuses (101, 601, 701), wobei die Kupplungseinheit dafür konfiguriert ist, strukturell und elektrisch mit einem anderen Endgerät (100, 200, 250, 300, 400, 500, 600, 700) gekoppelt zu werden.

8. Endgerät (100, 200, 250, 300, 400, 500, 600, 700) nach Anspruch 1, ferner umfassend:
eine Beschleunigungserkennungseinheit (123), die dafür konfiguriert ist, eine Beschleunigung eines Gehäuses (101, 601, 701) des Endgeräts (100, 200, 250, 300, 400, 500, 600, 700) zu erkennen, und
einen Airbag (133), der dafür konfiguriert ist, einen Stoß gegen einen Anwender des Endgeräts (100, 200, 250, 300, 400, 500, 600, 700) oder das Endgerät (100, 200, 250, 300, 400, 500, 600, 700) zu dämpfen,
wobei die Steuereinheit (151) den Airbag (133) auf der Basis der Beschleunigung aktiviert.

9. Endgerät (100, 200, 250, 300, 400, 500, 600, 700) nach Anspruch 1, ferner umfassend:
mehrere Anzeigen (207a, 207b),
wobei die Steuereinheit (151) eine Anzeige innerhalb der Anzeigen, die ein Bild anzeigt, gemäß der Ausrichtung umschaltet.

10. Steuerverfahren für ein Endgerät (100, 200, 250, 300, 400, 500, 600, 700), wobei das Verfahren umfasst:
Erkennen einer Betätigung einer Hardware-Betätigungseinheit (103, 203, 253, 303), die in eine bestimmte Richtung betätigt werden kann,
Bestimmen einer Ausrichtung eines die Betätigungseinheit (103, 203, 253, 303) umfassenden Endgeräts (100, 200, 250, 300, 400, 500, 600, 700) auf der Basis von Daten, die von einer Sensoreinheit (121) erfasst werden,
Bestimmen eines Vibrationszustandes des Endgeräts (100, 200, 250, 300, 400, 500, 600, 700) auf der Basis von Beschleunigungsdaten, die von der Sensoreinheit (121) erfasst werden; und
in Reaktion auf das Betätigen, Umschalten einer zu implementierenden Funktion gemäß der Ausrichtung auf der Basis von Daten, die von der Sensoreinheit (121) erfasst werden, und wobei
die Funktion ferner gemäß dem Vibrationszustand umgeschaltet wird oder nicht, und wobei,
wenn die Hardware-Betätigungseinheit (103, 203, 253, 303) eine Betätigung mit einem vorbestimmten Muster erkennt, die Funktion entsprechend der Ausrichtung unabhängig von dem Vibrationszustand umgeschaltet wird.

11. Computerprogramm, Befehle umfassend, die, wenn das Programm von dem Endgerät nach Anspruch 1 ausgeführt wird, das Endgerät veranlassen, die Verfahrensschritte von Anspruch 10 auszuführen.

## Revendications

1. Dispositif terminal (100, 200, 250, 300, 400, 500, 600, 700) comprenant :
une unité matérielle d'opération (103, 203, 253, 303) opérable dans une direction spécifique ;
une unité de détection (121) ;
une unité de détermination d'orientation (155) configurée pour déterminer une orientation du dispositif terminal (100, 200, 250, 300, 400, 500, 600, 700) comprenant l'unité matérielle d'opération (103, 203, 253, 303) sur la base de données acquises par l'unité de détection (121) ;
une unité d'acquisition d'informations environnementales (157) configurée pour déterminer un état de vibration du dispositif terminal (100, 200, 250, 300, 400, 500, 600, 700) sur la base de données d'accélération acquises par l'unité de détection (121) ; et
une unité de contrôle (151) configurée pour commuter une fonction à implémenter en réponse à une opération sur l'unité matérielle d'opération (103, 203, 253, 303) en fonction de l'orientation,
dans lequel l'unité de contrôle (151) est configurée pour commuter en outre la fonction en fonction de l'état de vibration, et
dans lequel lorsque l'unité matérielle d'opération (103, 203, 253, 303) détecte une opération ayant un motif prédéterminé, l'unité de contrôle (151) commute la fonction en fonction de l'orientation, indépendamment de l'état de vibration.

2. Dispositif terminal (100, 200, 250, 300, 400, 500, 600, 700) selon la revendication 1,
dans lequel l'unité d'acquisition d'informations environnementales (157) détermine l'état de vibration sur la base d'un changement d'accélération d'un boîtier (101, 601, 701) du dispositif terminal (100, 200, 250, 300, 400, 500, 600, 700).

3. Dispositif terminal (100, 200, 250, 300, 400, 500, 600, 700) selon la revendication 1,
dans lequel l'unité de détermination d'orientation (155) détermine l'orientation sur la base d'un angle d'inclinaison d'un boîtier (101, 601, 701) du dispositif terminal (100, 200, 250, 300, 400, 500, 600, 700).

4. Dispositif terminal (100, 200, 250, 300, 400, 500, 600, 700) selon la revendication 1,
dans lequel l'unité matérielle d'opération (103, 203, 253, 303) comporte une molette jog (103) qui détecte une opération de rotation ou une opération de pression, et/ou
dans lequel l'unité matérielle d'opération (103, 203, 253, 303) comporte un capteur tactile (203) non combiné à une GUI qui détecte une opération de glissement ou une opération de pression, et/ou
dans lequel l'unité matérielle d'opération (103, 203, 253, 303) comporte une jauge de contrainte (253) qui détecte une compression ou un étirement, et/ou
dans lequel l'unité matérielle d'opération (103, 203, 253, 303) comporte un bouton (303).

5. Dispositif terminal (100, 200, 250, 300, 400, 500, 600, 700) selon la revendication 1, comprenant en outre :
un boîtier (101, 601, 701) pouvant être porté à la main ou sur soi par un utilisateur pendant que l'utilisateur court,
dans lequel l'unité de contrôle (151) commute l'implémentation d'une fonction relative à une reproduction de musique et l'implémentation d'une fonction relative à une navigation pour coureurs en réponse à l'opération sur l'unité matérielle d'opération (103, 203, 253, 303).

6. Dispositif terminal (100, 200, 250, 300, 400, 500, 600, 700) selon la revendication 1, comprenant en outre :
un boîtier (101, 601, 701) ; et
une ceinture (611) configurée pour ceindre le boîtier (101, 601, 701),
dans lequel la ceinture (611) comporte plusieurs unités de rigidité (611b) et une unité extensible (611c) disposée entre les unités de rigidité respectives (611b),
dans lequel l'unité extensible (611c) se contracte et fait en sorte que les plusieurs unités de rigidité (611b) adhèrent intimement les unes contre les autres pour former une poignée, et
dans lequel l'unité extensible (611c) s'étend et fait en sorte que les plusieurs unités de rigidité (611b) se séparent les unes des autres pour former une partie de ceinture extensible.

7. Dispositif terminal (100, 200, 250, 300, 400, 500, 600, 700) selon la revendication 1, comprenant en outre :
un boîtier (101, 601, 701) ; et
une unité de couplage sur une surface du boîtier (101, 601, 701), l'unité de couplage étant configurée pour être couplée structurellement et électriquement à un autre dispositif terminal (100, 200, 250, 300, 400, 500, 600, 700).

8. Dispositif terminal (100, 200, 250, 300, 400, 500, 600, 700) selon la revendication 1, comprenant en outre :
une unité de détection d'accélération (123) configurée pour détecter une accélération d'un boîtier (101, 601, 701) du dispositif terminal (100, 200, 250, 300, 400, 500, 600, 700) ; et
un airbag (133) configuré pour amortir un impact sur un utilisateur du dispositif terminal (100, 200, 250, 300, 400, 500, 600, 700) ou le dispositif terminal (100, 200, 250, 300, 400, 500, 600, 700),
dans lequel l'unité de contrôle (151) actionne l'airbag (133) sur la base de l'accélération.

9. Dispositif terminal (100, 200, 250, 300, 400, 500, 600, 700) selon la revendication 1, comprenant en outre :
une pluralité de dispositifs d'affichage (207a, 207b),
dans lequel l'unité de contrôle (151) commute un dispositif d'affichage des dispositifs d'affichage qui affiche une image, en fonction de l'orientation.

10. Procédé de commande d'un dispositif terminal (100, 200, 250, 300, 400, 500, 600, 700), le procédé de commande comprenant :
la détection d'une opération sur une unité matérielle d'opération (103, 203, 253, 303) opérable dans une direction spécifique ;
la détermination d'une orientation d'un dispositif terminal (100, 200, 250, 300, 400, 500, 600, 700) comprenant l'unité d'opération (103, 203, 253, 303) sur la base de données acquises par une unité de détection (121) ;
la détermination d'un état de vibration du dispositif terminal (100, 200, 250, 300, 400, 500, 600, 700) sur la base de données d'accélération acquises par l'unité de détection (121) ; et
la commutation d'une fonction à implémenter en réponse à l'opération en fonction de l'orientation, sur la base de données acquises par l'unité de détection (121), dans lequel
la fonction est en outre commutée ou non en fonction de l'état de vibration, et dans lequel
lorsque l'unité matérielle d'opération (103, 203, 253, 303) détecte une opération ayant un motif prédéterminé, la fonction est commutée en fonction de l'orientation, indépendamment de l'état de vibration.

11. Programme informatique comprenant des instructions lesquels, quand le programme est exécuté par le dispositif terminal de la revendication 1, amènent le dispositif terminal à mettre en œuvre les étapes de procédé de la revendication 10.
